# EUROPEAN PATENT APPLICATION

(11) **EP 2 441 989 A1**
(43) Date of publication of application: **18.04.2012**
(21) Application number: 11182435.5
(22) Date of filing: 23.09.2011
(51) Int. Cl.: F16K 1/42, F16K 1/52, F16K 1/54, F16K 31/04

(54) **Electrically operated valve**

(30) Priority: 18.10.2010 JP 2010233536
(71) Applicant: Fujikoki Corporation, Tokyo 158-0082 (JP)
(72) Inventor: Suganuma, Takeshi, Setagaya-ku, Tokyo 158-0082 (JP)
(74) Representative: Schweiger, Martin

(57) **Abstract**

The invention provides an electrically operated valve which can circulate a cooling medium at a large amount in a moment of time after an engine starts and a power supply is turned on, and can lower an in-vehicle temperature in an early stage by spouting a cold air from an air conditioner. A second valve body (52) seats on a second valve seat (54) or a third valve seat (56) in a state in which a first valve body (51) seats on a first valve seat (53), whereby an electrically operated valve (10) comes to a closed state. When a power supply of an electrically operated valve (10) is turned on, the second valve body (52) comes away from the second valve seat (54), whereby a flow rate flowing through an annular opening having a large diameter comes to a large flow rate. Further, the flow is interrupted in a state in which the second valve body (52) seats on the third valve seat (56), and it is possible to set a flow rate flowing at a time when the first valve body (51) thereafter moves away from the first valve seat (53) to a small flow rate. In the case that the electrically operated valve (10) is applied to an air conditioner for a vehicle, a state in which a large flow rate of cooling medium can be circulated is achieved for a short time at a time when the power supply of the electrically operated valve (10) is turned on, and the air conditioner can spout a large amount of cold air in an early state.

## Description

### BACKGROUND OF THE INVENTION

### Field of the Invention

The present invention relates to an electrically operated valve which is used in an air conditioning system such as a car air conditioner or the like.

### Description of the Conventional Art

Conventionally, in the case of an outdoor parking space or the like, in a vehicle which is parked under a burning scorching, a sun beam streams in a vehicle inside, and an in-vehicle temperature becomes considerably high. In the vehicle put under such a special environment, even if an engine of the vehicle is started and an air conditioner is operated, there is seen such a phenomenon that a high-temperature air is spouted at the beginning from an air outlet of the air conditioner, and even if the air conditioner comes to a normal operation state and a cold air is blown, a considerable time is demanded until the in-vehicle temperature is lowered to a comfortable temperature.

A flow rate control valve is provided for controlling a flow rate of a cooling medium circulating the air conditioner and there can be considered to control the flow rate control valve in such a manner that a high flow rate flows at a time of starting the engine, while taking the condition mentioned above into consideration.

The assignee of the present invention has proposed an electrically operated valve for stably operating in Japanese Patent No. 4224187 in which the electrically operated valve is downsized by shortening a whole length, a rotation of a rotor opening and closing a valve port is stabilized, and the rotor is less inclined even at a time when the rotor is regulated by a stopper.

The electrically operated valve described in Japanese Patent No. 4224187 is provided with a valve main body which regulates a passing flow rate by a valve body coming close to and away from a valve seat within a valve chamber by a valve shaft, a can which has a rotor firmly attached to the valve main body and moving the valve body close to and away from the valve seat built-in, and a stator which is outward fitted to the can and rotationally drive the rotor, a drive mechanism moving the valve body close to and away from the valve seat is a screw feeding mechanism constructed by a guide bush which extends out of the valve main body in a rotor direction so as to be fixed and in which a fixed thread portion is formed, and a valve shaft holder which supports the rotor and has a moving thread portion screwing together with the fixed thread portion of the guide bush, the valve shaft holder and an upper end portion of the rotor is fixed by swaging via a support ring, and the support ring has a groove portion in an outer periphery of a swaging fixed portion. Since the screw feeding mechanism is arranged within the rotor, a whole length of the can and an outer diameter of the valve main body become smaller so as to achieve a downsizing of the electrically operated valve. Further if the rotor is rotated by exciting and magnetizing the stator, a rotation of the rotor becomes stabilized and a swing of the rotor with respect to a rotating shaft is reduced since the screw feeding mechanism supporting and driving the rotor is arranged within the rotor.

In the electrically operated valve mentioned above, a rotation control of the rotor is initiated by setting a valve closed state to a reference position. Further, since the rotation of the motor is converted into an elevating motion of a needle on the basis of a screw action, a flow rate flowing through the valve does not come to a maximum flow rate until the needle valve rises and a leading end of the needle comes to a state of completely coming off from the valve seat. Since a long time is demanded until the needle valve completely comes off from the valve seat, a prompt behavior in response to a condition can not be achieved by the electrically operated valve mentioned above.

### SUMMARY OF THE INVENTION

In an electrically operated valve, it is preferable that a high flow rate can be secured immediately at the same time of turning on a power supply. An object of the present invention is to provide an electrically operated valve starting a control from a valve closed state, in which the electrically operated valve can enlarge a flow rate in a moment of time after driving such as turning on a power supply, whereby it is possible to early lower an in-vehicle temperature, for example, by spouting a cold air from an air conditioner in a moment of time after starting an engine.

### Means for Solving the Problem

In order to achieve the object mentioned above, an electrically operated valve according to the present invention is provided,
a first valve body which is driven so as to be moved up and down by an elevating mechanism taking an output of a motor,
a second valve body which is provided with a first valve seat with which the first valve body comes into contact, and which is pressed via the first valve seat by the first valve body so as to be movable up and down, and
a second valve seat and a third valve seat which are larger in diameter than the first valve seat, and with which the second valve body comes into contactable in accordance with a downward motion or an upward motion of the second valve body,
wherein the first valve body comes into contact with the first valve seat on the basis of a pressing of the first valve body with respect to the second valve body, a flow rate control of a fluid flowing through the second valve seat and the third valve seat is carried out on the basis of a close and away motion of the second valve body with respect to the second valve seat and the third valve seat which is carried out in this state, the second valve body comes into contact with the third valve seat, and a flow rate control of the fluid flowing through the first valve seat is carried out on the basis of a close and away motion of the first valve body with respect to the first valve seat which is carried out in this state.

In accordance with the present electrically operated valve, the first valve body comes into contact with the first valve seat so as to press the second valve body, and the second valve body comes into contact with the second valve seat, whereby the first valve body and the second valve body respectively come to seated states on the first valve seat and the second valve seat. Next, if the first valve body moves up together with the second valve body in a state of coming into contact with the first valve seat, and the second valve body comes away from the second valve seat, the fluid flows through an opening (a gap) produced between the second valve body and the second valve seat (or the third valve seat). If the second valve body further moves up in a state in which the first valve body comes into contact with the first valve seat, the second valve body come to a seated state on the third valve seat. If the first valve body further moves up from this state, the first valve body moves away from the first valve seat while maintaining the second valve body coming into contact with the third vale seat, and the fluid flows through an opening (a gap).

### Effect of the Invention

Since the electrically operated valve according to the present invention is structured as mentioned above, the second valve body seats on the second valve seat or the third valve seat in a state in which the first valve body seats on the first valve seat, whereby the electrically operated valve comes to a so-called closed state (including a case of allowing a very small flow rate flowing in the case that a means for circulating the very small flow rate is provided). Further, it is possible to make a flow rate flowing through the electrically operated valve in this state large, by widening the opening (the gap) produced between the second valve body and the second valve seat by the second valve body coming away from the second valve seat. Further, the large flow rate of flow is blocked in the state in which the second valve body seats on the third valve seat, and it is possible to make the flow rate flowing through the electrically operated valve in this state small, by thereafter narrowing the opening (the gap) produced between the first valve body and the first valve seat at a time when the first valve body moves away from the first valve seat.

As a result, if the state in which the first valve body seats on the first valve seat and the second valve body seats in the second valve seat is set to the valve closed state for starting the control, it is possible to immediately achieve a high flow rate at a time when the second valve body moves away from the second valve seat from the closed valve state.

Further, in the case that the present electrically operated valve is applied to the air conditioner for the vehicle, the second valve body comes away from the second valve seat by turning on the power supply to the electrically operated valve, thereby achieving a state in which a large flow rate of cooling medium can be circulated for a short time, and the air conditioner can early spout a large amount of cooling air.

### BRIEF EXPLANAITON OF THE DRAWINGS

Fig. 1 is a vertical cross sectional view showing an embodiment of an electrically operated valve according to the present invention, and shows a state in which a first valve body and a second valve body respectively seat on a first valve seat and a second valve seat;
Fig. 2 is a view showing the electrically operated valve shown in Fig. 1 in a state in which the second valve body is away from the second valve seat under a state in which the first valve body seats on the first valve seat;
Fig. 3 is a view showing the electrically operated valve shown in Fig. 2 in a state in which the second valve body moves up so as to seat on a third valve seat under a state in which the first valve body seats on the first valve seat;
Fig. 4 is a view showing the electrically operated valve shown in Fig. 3 in a state in which the first valve body moves up so as to be away from the first valve seat under a state in which the second valve body seats on the third valve seat;
Fig. 5 is an enlarged cross sectional view showing a substantial part of an embodiment of the electrically operated valve according to the present invention; and
Fig. 6 is a graph showing a characteristic of a flow rate in correspondence to a valve opening degree of an embodiment of the electrically operated valve according to the present invention.

### DETAILED DESCRIPTION OF PREFERRED EMBODIMENT

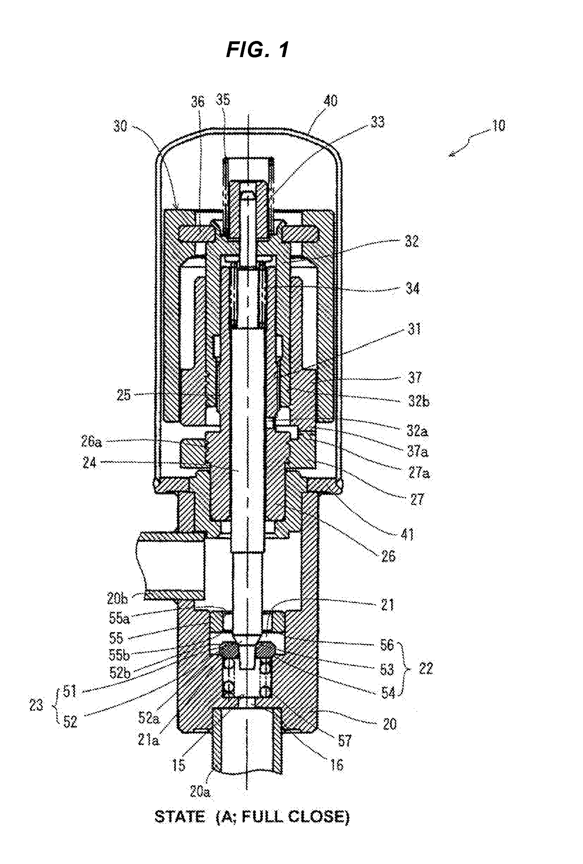

An embodiment of an electrically operated valve according to the present invention will be described on the basis of the accompanying drawings. Fig. 1 is a vertical cross sectional view of the electrically operated valve embodiment according to the present invention. An electrically operated valve 10 carrying out a flow rate control of a cooling medium in a refrigeration cycle or the like of a motor vehicle or the like is provided with a valve main body 20 which regulates a passing flow rate of the cooling medium by a valve body 23 coming close to and away from a valve seat 22 within a valve chamber 21, a can 40 which houses a rotor 30 firmly attached to the valve main body 20 and moving the valve body 23 close to and away from, and a stator (not shown) which is outward fitted to the can 40 and rotationally drives the rotor 30. A stepping motor is constructed by the rotor 30 and the stator. In this case, a specific structure of the stator is set to a structure disclosed in the Japanese Patent No. 4224187, and can be constructed, for example, by a yoke made of a magnetic material, and upper and lower stator coils which are wound to the yoke via a bobbin, and can be outward fitted to the can 40.

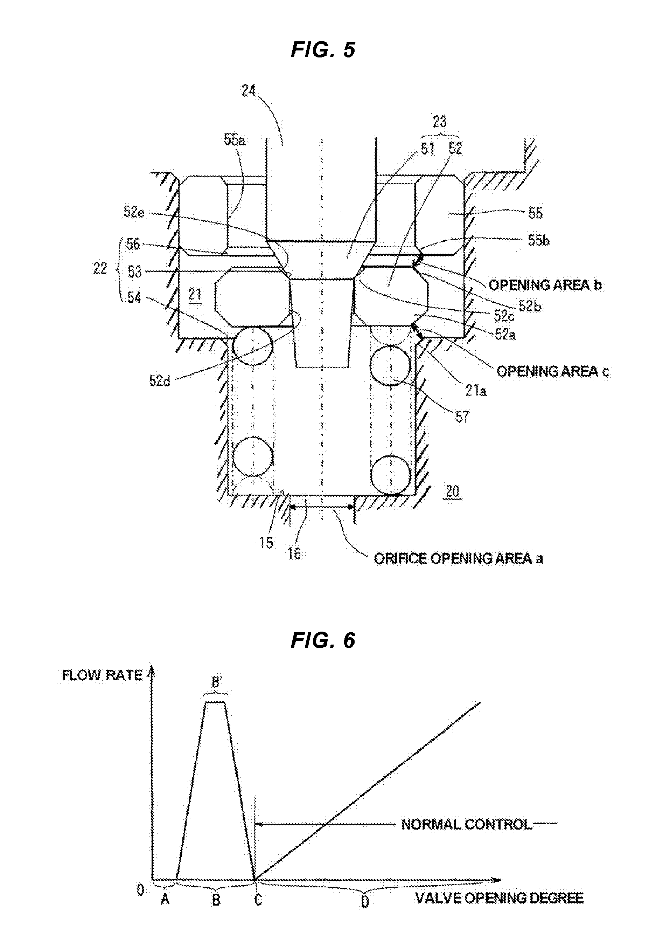

Further, the valve body 23 is a generic name of a first valve body 51 and a second valve body 52 which are described in detail with regard to Fig. 5, and the valve seat 22 is a generic name of a first valve seat 53, a second valve seat 54 and a third valve seat 56 which are described in detail with regard to the same drawing.

The can 40 is formed as a closed-end cylindrical shape which is formed by a nonmagnetic metal such as a stainless steel or the like, is firmly attached to a collar plate 41 made of a stainless steel by the welding or the like, which is firmly attached to an upper portion of the valve main body 20, and is kept in an airtight state in its inner portion. In the valve main body 20, a fluid inflow pipe 20a in a vertical direction and a fluid outflow pipe 20b in a horizontal direction are extended out. In this case, the fluid flow direction may be inverted (the pipe 20a is used as the fluid outflow pipe, and the pipe 20b is used as the fluid inflow pipe).

The first valve body 51 of the valve body 23 constructed by a needle valve is formed in a lower end of a valve shaft 24 made of a brass. A drive mechanism moving the valve body 23 close to and away from the valve seat 22 is a screw feeding mechanism constructed by a tubular guide bush 26 which extends out in a direction of the rotor 30 from the valve main body 20 so as to be fixed and in which a fixed thread portion (a male thread portion) 25 is formed, and a valve shaft holder 32 which has a moving thread portion (a female thread portion) 31 engaging with the fixed thread portion 25 of the guide bush 26, and the thread feeding mechanism is arranged approximately in a center portion of a whole length in an axial direction within the rotor 30.

In the electrically operated valve shown in the present embodiment, a length in the axial direction and an outer diameter of the valve main body are widely reduced in comparison with the structure in which the screw feeding mechanism is positioned below the rotor such as the conventional electrically operated valve, whereby it is possible to achieve a downsizing of the electrically operated valve. The fixed thread portion 25 is constructed by a male thread in an outer periphery of the guide bush 26, and the moving thread portion 31 is constructed by a female thread in an inner periphery of the valve shaft holder 32. In this case, the guide bush 26 and the valve shaft holder 32 are both formed by a cylindrical member made of a brass.

The valve shaft holder 32 is formed as a below opened cylindrical shape which is positioned in an outer side of the guide bush 26, and is structured such that the moving thread portion 31 is formed in an inner surface thereof as mentioned above, and an upper contracted portion of the valve shaft 24 is fitted to a center of the valve shaft holder 32 so as to be connected by a push nut 33. The valve shaft 24 forming the valve body 23 in a lower end thereof is constructed by a brass, is fitted and inserted to the center of the valve shaft holder 32 so as to be movable up and down, and is energized normally downward by a compression coil spring 34 which is provided in a compressing manner within the valve shaft holder 32. A pressure equalizing hole 32a achieving a pressure equalization within the valve chamber 21 and the can 40 is formed in a side surface of the guide bush 26.

A restoring spring 35 constructed by a cylindrical compression coil spring is attached to an outer periphery of the bush nut 33 which is pressed into and fixed to an upper end of the valve shaft 24, and when a screw engagement between the fixed thread portion 25 of the guide bush 26 and the moving thread portion 31 of the valve shaft holder 32 comes off, the restoring spring 35 comes into contact with an inner surface of a top portion of the can 40 so as to energize in such a manner as to restore the screw engagement between the fixed thread portion 25 and the moving thread portion 31. The restoring spring 35 may be attached in a state of being loosely fitted to an outer periphery of the push nut 33 so as to be mounted, or may be attached in such a manner as to come into elastic contact with the outer periphery of the push nut 33.

The valve main body 20 is constructed by a metal such as a brass or the like, and a joint with the can 40 is carried out by butt welding of the can end portion to a step portion of the collar plate 41 which is firmly attached to the valve main body 20 by welding or the like. In this case, not being limited to the but welding, the end portion of the can 40 may be folded flat in an outer periphery so as to be formed as a collar portion, and the collar portion and the collar plate 41 may be fixed by a so-called put-together hands welding.

The valve shaft holder 32 and the rotor 30 are connected via a support ring 36, and the support ring 36 is constructed by a metal ring made of a brass in the present embodiment which is inserted at a time of forming the rotor 30. An upper protruding portion of the valve shaft holder 32 is fitted to an inner peripheral hole portion of the support ring 36, and the rotor 30, the support ring 36 and the valve shaft holder 32 are connected by caulking an outer periphery of the protruding portion. The valve main body 20, the valve shaft 24, the guide bush 26, the valve shaft holder 32 and the support ring 36 are all made of the brass as mentioned above by taking a recycle into consideration. Further, since each of the parts is connected by pressure insertion and caulking, it is possible to reuse for example the rotor 30 by removing the caulking between the valve shaft holder 32 and the support ring 36. In this case, it goes without saying that the other metals than the brass, for example, a stainless steel can be used. Further, it goes without saying that the other metals than the brass, for example, a stainless steel can be used only in the valve shaft 24.

A lower stopper body (a fixed stopper) 27 constructing one side of a stopper mechanism is firmly attached to the guide bush 26, and the lower stopper body 27 is constructed by a ring-like plastic, and is provided in a protruding manner in an upper portion with a plate-like lower stopper piece 27a. Further, an upper stopper body (a moving stopper) 37 constructing the other side of the stopper mechanism is firmly attached to the valve shaft holder 32, and the upper stopper body 37 is also constructed by a ring-like plastic, and is provided in a protruding manner with a plate-like upper stopper 37a toward a lower side so as to be capable of engaging with the lower stopper piece 27a mentioned above.

The lower stopper body 27 is firmly attached to a spiral groove portion 26a formed in an outer periphery of the guide bush 26 by an injection molding, and the upper stopper body 37 is firmly attached to a spiral groove portion 32b formed in an outer periphery of the valve shaft holder 32 by an injection molding. In this case, it goes without saying that the lower stopper body 27 and the upper stopper body 37 may be firmly attached by an adhesion, a pressure insertion or the like without being limited to the injection molding.

A description will be given of a motion of the electrically operated valve 10 structured as mentioned above. If the coil of the stator is excited by applying an electricity, the rotor 30 and the valve shaft holder 32 are rotated with respect to the guide bush 26 which is firmly attached to the valve main body 20, and the valve shaft holder 32 moves up and down in an axial direction thereof by the screw feeding mechanism of the fixed thread portion 25 of the guide bush 26 and the moving thread portion 31 of the valve shaft holder 32. In correspondence to an exciting direction, the valve shaft holder 32 moves, for example, downward, and the valve body 23 seats on the valve seat 22 or comes away from the valve seat 22.

At a time point when the valve body seats (at a time point when the first valve body 51 presses the second valve body 52 and the second valve body 52 seats on the second valve seat 54), the upper stopper body 37 does not come into contact with the lower stopper body 27, and the rotor 30 and the valve shaft holder 32 further rotate and move downward while the valve body 23 keeps seating. At this time, a relative downward displacement of the valve shaft holder 32 with respect to the valve shaft 24 is absorbed by that the compression coil spring 34 being compressed. Thereafter, the rotor 30 further rotates, the valve shaft holder 32 moves downward and the stopper piece 37a of the upper stopper body 37 comes into contact with the stopper piece 27a of the lower stopper body 27. The downward movement of the valve shaft holder 32 is forcibly stopped by the contact between the stopper pieces 27a and 37a, even if the current application to the stator is carried over.

Since the stopper mechanism constructed by the upper stopper body 37 and the lower stopper body 27 is arranged within a total length in the axial direction of the rotor 30, the rotor 30 and the valve shaft holder 32 is hardly ever inclined largely even in the case that the stopper mechanism functions, an actuation thereof is stabilized, and it is possible to smoothly carry out an actuation even in the case that the rotor 30 is next rotated inverse.

If the current application to the stator is carried out in an inverse direction, the rotor 30 and the valve shaft holder 32 are rotated in the inverse direction to the above with respect to the guide bush 26, the valve shaft holder 32 moves upward and the valve body 23 in the lower end of the valve shaft 24 comes away from the valve seat 22 by the screw feeding mechanism mentioned above, and the cooling medium can pass. A passing amount of the cooling medium can be regulated by changing a valve opening degree according to an amount of rotation of the rotor 30. Since the amount of rotation of the rotor 30 is regulated by an input pulse number to a pulse motor, it is possible to accurately regulate the passing amount of the cooling medium.

As mentioned above, the rotation of the rotor 30 is converted into an axial movement of the rotor 30, the valve shaft holder 32 and the valve shaft 24 by the screw feeding mechanism constructed by the fixed thread portion 25 of the guide bush 26 and the moving thread portion 31 of the valve shaft holder 32. Since the screw feeding mechanism is positioned particularly in the center portion within the rotor 30 and the support and the drive of the rotor 30 are carried within a total length of the rotor 30, the rotor 30 is hardly oscillated at a time of rotating, and it is possible to stably rotate.

A substantial part of the present embodiment of the electrically operated valve is shown as an enlarged cross sectional view in Fig. 5. With reference to Figs. 1 and 5 in conjunction, the valve body 23 is constructed by the first valve body 51 which is driven so as to be moved up and down by the screw feeding mechanism serving as the elevating mechanism by being exposed to the output of the motor, and the second valve body 52 which is pressed by the first valve body 51 so as to be movable up and down. The first valve body 51 is a needle valve body which integrally extends in the axial direction from the valve shaft 24, and is accessorily provided with a needle portion formed as a taper shape in a leading end side thereof. Further, the second valve body 52 is a ring-like valve body to which the needle valve body can be fitted. An inner peripheral upper edge portion 52c of the ring-like second valve body 52, that is, an edge portion in which a through hole 52d of the second valve body 52 and a taper opening surface 52e intersect serves as the first valve seat 53 with which the first valve body 51 serving as a needle valve body can come into contact.

The valve chamber 21 formed in the valve main body 20 is provided with the second valve seat 54 and the third valve seat 56 which are formed larger in diameter than the first valve seat 53. An annular corner portion 21 a of the step portion of the valve chamber 21 comes to the second valve seat 54, and an outer periphery lower edge portion 52a can seat on the second valve seat 54 at a time when the ring-like second valve body 52 moves down. A ring-like valve seat body 55 is fixed to the valve chamber 21 at an above position of the second valve body 52 by a means such as a pressure insertion or the like. A center portion of the valve seat body 55 comes to a through hole 55a for constructing the ring, and the valve shaft 24 and the needle valve can be inserted via a gap with respect to the through hole 55a. An inner peripheral lower edge portion 55b of the valve seat body 55 comes to the third valve seat 56, and when the second valve body 52 moves up, an outer peripheral upper edge portion 52b thereof can seat on the inner peripheral lower edge portion 55b of the valve seat body 55.

An orifice 16 which is open to a bottom surface of the valve main body 20 is formed in the bottom portion 15 of the valve chamber 21, and a coil spring 57 is arranged in a compressed state between the bottom portion 15 and the second valve body 52, in such a manner as to prevent an interference with the orifice 16. The first valve body 51 comes into contact with (seats on) the first valve seat 53 on the second valve body 52 by pressing the second valve body 52 at a time when the first valve body 51 moves downward. In this state, the second valve body 52 moves down or up in correspondence to the upward movement or the downward movement of the first valve body 51, whereby the second valve body 52 moves close to and away from the second valve seat 54 or the third valve seat 56, and a fluid flow rate control is carried out between the first valve body 51 and the second valve body 52 (in other words, the outer peripheral portion of the closed second valve body 52) and between the second valve seat 54 and the third valve seat 56.

Further, if the first valve body 51 is pulled up from the state in which the first valve body 51 and the second valve body 52 come into contact, the second valve body 52 moves up on the basis of a snapping force of the coil spring 57, the second valve body 52 comes into contact with the third valve seat 56, and only the first valve body 51 can move up thereafter, whereby a flow rate control is carried out between the first valve body 51 and the first valve seat 53.

In this case, the through hole 52d coming to an orifice portion of the second valve body 52 is formed smaller in diameter than the second valve seat 54 and the third valve seat 56. Further, in this embodiment, the first valve seat 53 is approximately the same diameter as the orifice 16.

Fig. 1 shows a state (A) in which the first valve body 51 and the second valve body 52 respectively seat on the first valve seat 53 and the second valve seat 54. This state shows a state in which the valve shaft 24 is moved down by the driving of the motor, the first valve body 51 comes into contact with (seats on) the first valve seat 53 on the second valve body 52, the first valve body 51 and the second valve body 52 move down further while compressing the coil spring 57 by further the driving of the motor under this state, the second valve body 52 seats on the second valve seat 54 provided in the valve chamber 21, and an opening area comes to zero, and is a valve closed state (a control starting valve closed state) corresponding to a control start state of the electrically operated valve 10. In this case, with regard to "closed valve state", if the fluid circuit is left in a state coming to a so-called completely "close" state, there is a risk that the fluid is reserved at a high pressure in a circuit of a refrigeration cycle. The electrically operated valve 10 is in the valve closed state if such a device as a bleed groove and hole is not applied to each of the valve bodies and the valve seats, however, there can be considered to lower the pressure by leaking the fluid little by little even at a time of the valve close, in such a manner as to keep circulating a small flow rate even at a time of turning off the power supply in a fully closed state, by applying the device mentioned above. In the present electrically operated valve, a description will be given on the assumption that the valve closed state includes a state of allowing the small flow rate even at a time of the valve close, by forming the bleed groove and hole or the like.

It is preferable that the electrically operated valve 10 stops the rotation of the stepping motor at a time of the control starting valve closed state, that is, at a time when the first valve body 51 comes into contact with and press the second valve body 52 and the second valve body 52 seats on the second valve seat 54. However, since the parts and the assembled products have dispersion, the compression coil spring 34 is put for absorbing such the dispersion. The electrically operated valve 10 is stopped after the valve closed state by ensuring that the valve closed state mentioned above is achieved before both the stoppers 27 and 37 come into contact, and thereafter continuously moving the rotor while compressing the compression coil spring 34 until both the stoppers 27 and 37 come into contact. Further, as a result of this, at a time of inversely rotating the stepping motor so as to change from the control starting valve closed state to the valve open state, both the stoppers 27 and 37 break away from the contact state with each other at first several pulses after the power supply is turned on, however, the valve closed state is maintained.

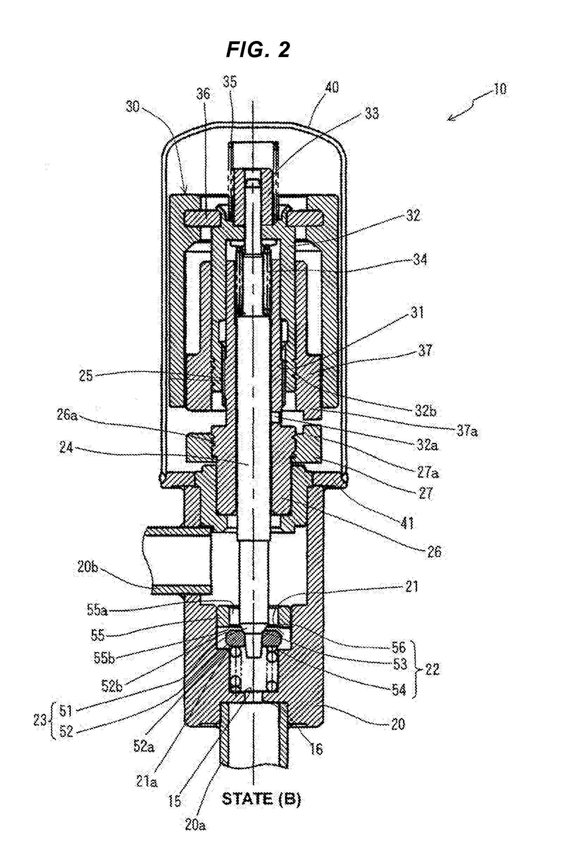

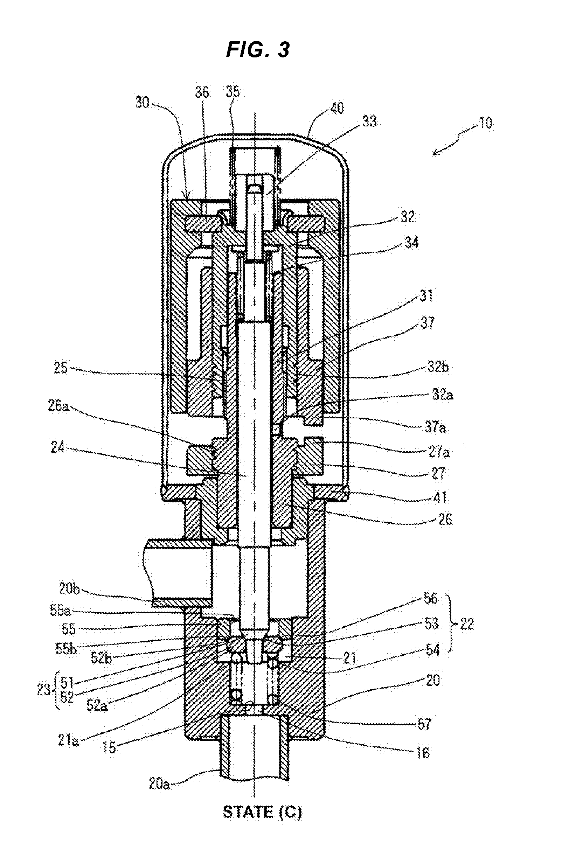

Fig. 2 shows a state (B) in which the valve shaft 24 is pulled up from the state shown in Fig. 1, the first valve body 51 and the second valve body 52 move up while maintaining the contact by the snapping force of the coil spring 57, and the second valve body 52 is positioned between the second valve seat 54 and the third valve seat 59. Since the state in which the first valve body 51 seats on the first valve seat 53 is maintained by the restoring force of the coil spring 57, at a time when the valve shaft 24 moves up on the basis of the drive of the motor in the inverse direction, the first valve body 51 and the second valve body 52 move up together. Since the second valve body 52 is away from the second valve seat 54 while the first valve body 51 corresponding to the needle valve keeps seating on the first valve seat 53 at a time of the upward movement, a large flow rate of fluid flows from the fluid inflow pipe 20a to the fluid outflow pipe 20b through a peripheral shaped opening area c (Fig. 5) which is open with respect to the second valve body 52. At this time, since the opening area c is formed as a large-diameter annular shape with respect to the second valve body 52, the opening area c becomes larger even in a slight rise of the second valve body 52, and a large flow rate of flow can be obtained for a short time (a slight rise of the first valve body 51). This state (B) is carried over until being changed to the following Fig. 3.

Fig. 3 shows a state (C) in which the first valve body 51 and the second valve body 52 move up further from the state shown in Fig. 2, and the second valve body seats on the third valve seat 56 under the state in which the first valve body 51 keeps being in contact with the second valve body 52. If the valve shaft 24 moves up by further driving the motor in the inverse direction, the second valve body 52 moves up while following to the first valve body 51 rising on the basis of the restoring force of the coil spring 57. Fig. 3 shows a state in which the seating state of the first valve body 51 on the first valve seat 53 is maintained, the second valve body 52 seats on the third valve seat 56 and an opening area b (Fig. 5) comes to zero, and the electrically operated valve 10 is in the valve close state in the same manner as Fig. 1. In other words, the electrically operated valve 10 is closed until a flow rate comes to zero, after being temporarily opened so as to achieve a high flow rate, as shown in Fig. 2.

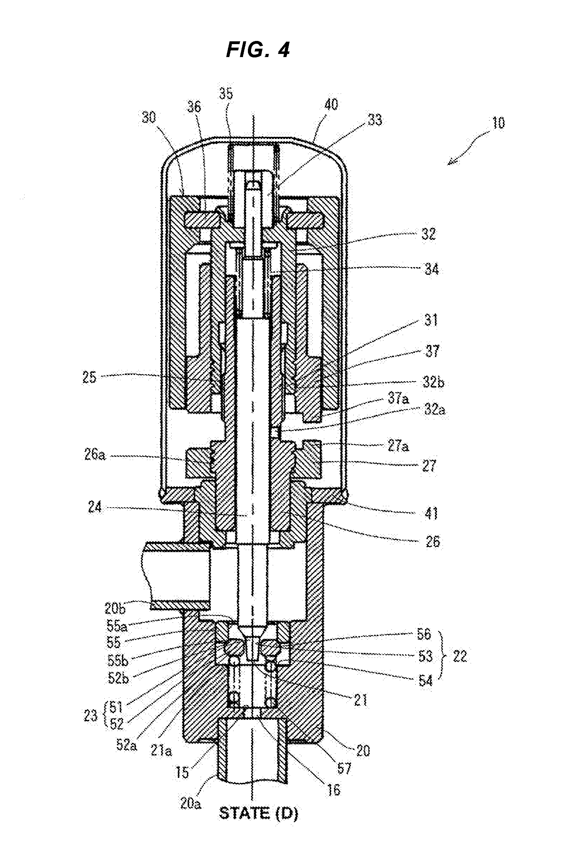

Fig. 4 shows a state (D) in which only the first valve body 51 further moves up from the state shown in Fig. 3. Since the second valve body 52 comes to the state of seating on the third valve seat 56 on the basis of the restoring force of the coil spring 57, only the first valve body 51 moves up and is away from the first valve seat 53 so that the needle valve is opened, if the valve shaft 24 moves up on the basis of the further drive of the motor in the inverse direction. An opening degree of the needle valve is changed in correspondence to a rising degree of the first valve body 51 so that it is possible to regulate the flow rate. Since the opening area b is zero even if the opening area c is opened at the maximum, the flow flowing around the second valve body 52 is shut off.

Since the first valve seat 53 is small in its valve seat aperture as is different form the second valve seat 54 and the third valve seat 56, and the needle portion is accessorily provided in the first valve body 51 at its leading end, it is possible to make a change of the opening area per unit pulse (one pulse for the stepping motor driving pulse) minute in the case that only the first valve body 51 moves up from the first valve seat 53. The fine flow rate control carried out by the conventional electrically operated valve such as the Japanese Patent No. 4224187 is carried out by the first valve body 51 in the present state.

Fig. 6 shows a graph showing a characteristic of a flow rate in correspondence to a valve opening degree of the electrically operated valve according to the present invention. In Fig. 6, a horizontal axis indicates a valve opening degree, a vertical axis indicates a flow rate, and reference symbols (A) to (D) respectively indicate the states shown in Figs. 1 to 4. In the state (A) in which the valve opening degree is zero shown in Fig. 1, the first valve body 51 and the second valve body 52 both seat, and the flow rate is zero. If the drive of the motor is started and the valve shaft 24 moves up, the second valve body 52 is away from the second valve seat 54 and the flow rate is rapidly increased on the basis of a rapid increase of the opening area c. Thereafter, the second valve body 52 further moves up so that the opening area c is increased and the opening area b is reduced, however, if any one of the opening area b and the opening area c is smaller than the opening area a of the orifice 16, the flow rate comes to a flow rate which is defined by the smaller opening area. This state is generated in the case that the amount of rise that the second valve body 52 is away from the second valve seat is small, and in the case that the second valve body 52 comes closer to the third valve seat 56. In an intermediate of these states, there is a case that both the opening area b and the opening area c are larger than the opening area a of the orifice 16, and the flow rate employs a state (B') which is flat, comes to a maximum flow rate and is defined by the opening area a of the orifice 16 having the smallest opening area. In other words, when the opening area c becomes larger than the opening area a, the flat portion (the region in which the flow rate is fixed regardless of the valve opening degree) is started. Since the opening area b becomes smaller in accordance with the increase of the opening area c, the portion in which the flow rate is reduced is formed, if the opening area b becomes smaller than the opening area a.

In the electrically operated valve 10, the pulse position until reaching the maximum flow rate varies in accordance with a precision per product (or a used part). Accordingly, it is preferable to reduce a dispersion of the maximum flow rate by setting a range of the valve opening degree at which the maximum flow rate becomes flat even if the valve opening degree deviates in some degree. In other words, if the maximum flow rate characteristic indicates a steep triangular mountain characteristic without becoming flat, it is not secured that the flow rate at a time when the elevating motion of the valve stops is the maximum flow rate. It is possible to carry out the valve opening degree control aiming at the maximum flow rate by being provided with the characteristic at which the maximum flow rate becomes flat.

Long and short of it is that it is possible to absolutely secure the maximum flow rate in the region (B) even if a somewhat difference is generated between the valve opening degree assumed by the pulse number input to the stepping motor and the actual valve opening degree, by being provided with the flat maximum flow rate portion (B') mentioned above.

In the state (C) shown in Fig. 3, the first valve body 51 and the second valve body 52 seat respectively on the first valve seat 53 and the third valve seat 56 so that a flow rate becomes zero. Thereafter, if the valve shaft 24 rises further, the valve opening degrees is increased in correspondence to the rising degree, and changes to the normal control state (D) in which the flow rate is increased little by little. In this embodiment, since the opening area of the orifice 16 and the opening area of the first valve seat 53 (the opening area of the through hole 52d) are made approximately the same, as shown in Fig. 5, the flat maximum flow rate (B') of the large flow rate control region shown by the state (B) approximately coincides with the maximum flow rate of the normal flow rate control region shown by the state (D). In this case, if the flat maximum flow rate region (B') of the state (B) is set to a narrow range, it is apparent that it is possible to change to the state (C) for a short time, and it is possible to quickly change to the normal control.

In the embodiment mentioned above, the description is given of the embodiment in which the coil spring 57 is provided, however, in the case that the fluid flows into from the second valve seat 54 side (the fluid inflow pipe 20a side), the second valve body 52 is pressed to the third valve seat 56 side on the basis of the fluid pressure. Accordingly, in the case that the electrically operated valve 10 is used as mentioned above, the coil spring 57 can be omitted.

Further, it goes without saying that it is possible to appropriately set the bore diameters of the first valve seat 53, the second valve seat 54, the third valve seat 56 and the orifice 16 on the basis of the specification required in the electrically operated valve.

## Claims

1. An electrically operated valve comprising:
a first valve body being driven so as to be moved up and down by an elevating mechanism taking an output of a motor;
a second valve body being provided with a first valve seat with which said first valve body comes into contact and being movable up and down by being pressed said first valve seat by said first valve body through; and
a second valve seat and a third valve seat which are larger in diameter than said first valve seat, and with which said second valve body comes into contactable in accordance with a downward motion or an upward motion of said second valve body,
wherein said first valve body comes into contact with said first valve seat on the basis of a pressing said first valve body with respect to said second valve body, a flow rate control of a fluid flowing through said second valve seat and said third valve seat is carried out on the basis of a close and away motion of said second valve body with respect to said second valve seat and said third valve seat which is carried out in this state, said second valve body comes into contact with said third valve seat, and a flow rate control of the fluid flowing through said first valve seat is carried out on the basis of a close and away motion of said first valve body with respect to said first valve seat which is carried out in this state.

2. An electrically operated valve as claimed in claim 1, wherein the control of said electrically operated valve is started from the state in which said second valve body comes into contact with said second valve seat on the basis of the pressing of said first valve body with respect to said second valve body.

3. An electrically operated valve as claimed in claim 1 or 2, wherein an orifice portion which is smaller in diameter than said second valve seat is formed in an opposite side to said first valve body with respect to said second valve body.

4. An electrically operated valve as claimed in claim 3, wherein an opening area (c) which is defined by said second valve body and said second valve seat and an opening area (b) which is defined by said second valve body and said third valve seat are both made larger than an opening area (a) of said orifice portion, in a section in which said second valve body moves between said second valve seat and said third valve seat.

5. An electrically operated valve as claimed in claim 3 or 4, wherein said first valve seat has approximately the same diameter as said orifice portion.

6. An electrically operated valve as claimed in any one of claims 1 to 5, wherein a spring means energizing said second valve body with respect to a direction of said third valve seat is provided, and said first valve body presses said second valve body from a direction of said third valve seat with respect to said second valve body.

7. An electrically operated valve as claimed in any one of claims 1 to 6, wherein a needle valve is accessorily provided in a leading end of said first valve body.
